# EUROPEAN PATENT SPECIFICATION

(11) **EP 2 018 809 B1**
(45) Date of publication and mention of the grant of the patent: **03.09.2014**
(21) Application number: 06756329.6
(22) Date of filing: 10.05.2006
(51) Int. Cl.: A22C 17/12, A22B 5/16

(54) **SKINNING METHOD AND DEVICE FOR CUTTING MEAT WITH SKIN**
ENTHÄUTUNGSVERFAHREN UND VORRICHTUNG ZUM SCHNEIDEN VON FLEISCH MIT HAUT
PROCÉDÉ DE DEPOUILLAGE ET DISPOSITIF DE COUPE DE VIANDE AVEC PEAU.

(43) Date of publication of application: 28.01.2009
(73) Proprietor: Mayekawa Mfg. Co., Ltd., Koto-ku Tokyo 135-8482 (JP)
(72) Inventor: KISO, Katsunori, Tokyo 135-0046 (JP); UKAJI, Yasushi, Tokyo 135-0046 (JP); GOTO, Osamu, Tokyo 135-0046 (JP); SHINYA, Yoshinobu, Soo-shi, Kagoshima 899-8605 (JP)
(74) Representative: Strehl Schübel-Hopf & Partner
(86) International application number: PCT/JP2006/309412
(87) International publication number: WO 2007/129409

(56) References cited:
- JP-B2- 55 042 807
- JP-B2- 59 007 409
- JP-B2- 59 016 740
- JP-U- 64 022 276
- US-A- 4 186 461
- US-A- 4 351 088
- US-A- 4 415 953
- US-A- 4 631 780
- US-A1- 2004 166 793
- US-A1- 2004 166 793

## Description

### TECHNICAL FIELD

The present invention relates to a method of skinning a partial meat block with skin of animal carcasses such as pig, cow, sheep, etc. to automate skinning operation and an apparatus therefore and a cutter device applied to the apparatus, with which the partial meat block can be skinned more sanitarily and uniformly because of mechanized processing and workload of trimming operation in post-processing is reduced as compared with manual skinning operation.

### BACKGROUND ART

Conventionally, skinning operation of partial meat block with skin of animal carcasses such as pig, cow, sheep, etc. has been performed in such a fashion that a rotary blade is provided under a working table such that the blade edge thereof protrudes from a slit formed in the table and the skin of the meat block is cut by moving or rolling the meat block on the table, or a hand held skinner device has been used to remove the skin from animal carcasses manually as disclosed in Document 1, Document 2, and Document 3.
Document 1: US.Pat. No.4186461
Document 2: US.Pat. No.4451953
Document 3: US.Pat. No.4631780

### PROBLEMS TO BE SOLVED BY THE INVENTION

However, skinning is done basically manually with those methods and workload is large for workers and it is a time consuming operation, and in addition, it is disadvantageous in sanitary point of view because workers touch the meat blocks with skin to put, push or roll them on the work table. Besides, as skinning is performed manually, the skin may be removed unevenly in its thickness depending on the skill of workers, which has an influence on yields of meat and increase workload of trimming operation in post-processing.

The present invention was made in light of the problems of prior art, and the object of the invention is to provide a method and apparatus with which skinning of a partial meat block with skin of animal carcasses can be performed more sanitarily and uniformly by excluding manual skinning operation on a work table or by a hand skinner device.

US 4 351 088 A discloses a method and an apparatus for removing skin of a meat block with skin of an animal carcass. The method comprises: removing the skin from the rear legs of the carcass, vertically suspending the carcass, shifting and holding the carcass against a revolvable cylindrical supporting medium, mechanically cutting the torso portion of the skin of the animal longitudinally of the carcass while the latter is held against said cylindrical supporting means, engaging and gripping the longitudinally cut edge of the torso portion of skin by a revolvable gripping medium on said cylindrical supporting medium, and urging the flap forming blade to form a skin flap, partially winding the flap about the gripping medium, and revolving said cylindrical supporting medium against a skinning blade to progressively remove the torso portion of the animal skin from the carcass.

US 2004/166793 A1 discloses a method and an apparatus for removing skin from an animal having a torso. The method uses an apparatus having a rotatable drum, a gripper, a sharp blade positioned near said point on said circumference of said rotatable drum for cutting said skin from said animal, a dull blade, said dull blade adapted to contact said skin of said animal as said animal rotates, comprising the steps of: gripping a portion of said skin of said torso of said animal by said gripper;
rotating said drum causing said torso of said animal to rotate forcing said dull to peel said skin from said torso as said torso contacts said dull blade; and
adjusting said dull blade gap distance in accordance with a predetermine profile which varies around said torso of said animal.

### MEANS FOR SOLVING THE PROBLEMS

To attain the object, the present invention proposes a method of skinning a partial meat block with skin of animal carcasses by allowing a cutter device to follow along the surface of the skin comprising:
a suspending step to suspend the partial meat block with skin to a clamper device, determine rotational position of the clamper device to determine rotational position of the partial meat block with skin,
a cutter device positioning step to push the cutter device toward the partial meat block with skin so that claws formed on the periphery of a skin feed roller of the cutter device bite into the skin of the partial meat block with skin, and
a skinning step to remove the skin with a straight cutter attached to the cutter device while rotating the partial meat block of which the skin is bitten into with the claws of the skin feed roller of the cutter device by rotating the skin feed roller by a servomotor, characterized in that the suspending step further comprises inserting a swing prevention bar into a lower end part of the partial meat block with skin so that it is stably rotatable around a center line passing the center of the swing prevention bar and the center of suspension of the partial meat block with skin to the clamper device.

According to the method of the invention, the partial meat block with skin is rotated by the rotation of the skin feed roller, separate driving means to rotate the partial meat block with skin is not used, and smooth and energy saving skinning operation is achieved.

By rotating the partial meat block with skin by the rotation of the skin feed roller, better skin-removed condition can be obtained as compared with a case the partial meat block with skin is rotated by rotating the clamper device.

After the skin is removed, the removed strip of skin can be cut off by retreating the skin feed roller while its rotation being kept. Then the meat block is removed from the clamper device.

When pressing the cutter device onto the meat block at the cutter device positioning step, the meat block is held by for example resin made pusher rollers to stabilize the meat block, and when performing skinning, the pusher rollers are disengaged from the meat block. Generally, the suspending partial meat block with skin is not circular in horizontal section, so rotation of the meat block is disturbed if the pusher rollers are contacting the surface of the meat block.

By increasing pushing force to push the cutter device when positioning the cutter device so that claws formed on the periphery of a skin feed roller of the cutter device bite into the skin of the partial meat block with skin and decreasing when skinning is performed by rotating the partial meat block with skin by the rotation of the skin feed roller, the claws can be bitten into the skin without fail and the meat bloc can be rotated smoothly when performing skinning.

The partial meat block with skin is rotated by rotating the skin feed roller of the cutter device, so when the cutter device is kept away from the meat block, determination of rotational position of the meat block when inserting the swing prevention bar into the lower end part of the meat block is done by rotating a clamper shaft of the clamper device by another rotating means. For example, a method of rotating the clamper shaft of the clamper device in both directions by providing a plurality of cylinders is adopted.

According to the method, as the skin feed roller of the cutter device is rotated by the servomotor which has drooping characteristic in torque-rotation speed relation, rotation of the skin feed roller is continued without being stopped even when driving torque of the meat block increases due to change in friction between the skin feed roller and the surface of the meat block, and even when the rotation of the skin feed roller stops due to excessive load, the servomotor can be easily restarted.

According to the method, horizontal skinning is possible by rotating the meat block by the rotation of the skin feed roller with the vertical position of the cutter device maintained and also spiral skinning is possible by rotating the meat block by the rotation of the skin feed roller while lifting the cutter device.

For example, in a case of skinning a pig thigh, the upper portion of the pig thigh suspending from the clamper device with its ankle clamped is surrounded all around with the skin and the lower portion is surrounded with the skin partly not all around, horizontal skinning is performed by rotating the meat block by 180 degrees without moving the cutter device vertically.

In this case, a position where rate of change of inclination of a vertical ridge line of the suspended pig thigh between the ankle part and hip side part thereof exceeds a reference value is determined as the position at which to start skinning, the skin in an upper region above said position at which to start skinning is removed by the straight cutter of the cutter device by rotating the thigh by rotating the skin feed roller of the skinning tool of the cutter device while lifting the cutter device to perform upwardly spiraling removing of a strip of the skin with the lifting speed increased as the straight cutter approaches the ankle, and the skin in the hip side region below said position at which to start skinning is removed horizontally by the straight cutter of the cutter device by rotating the thigh by rotating the skin feed roller of the skinning tool of the cutter device. In this way, skinning of all around the pig thigh can be performed efficiently.

The present invention proposes an apparatus for skinning a partial meat block with skin of animal carcasses using a cutter device, comprising:
a clamper device, suspending the partial meat block with skin,
a centering unit, stabilizing and positioning the suspended partial meat block with skin to prepare for inserting a swing prevention bar thereinto,
a swing prevention unit, preventing swing of the partial meat block with skin by inserting said swing prevention bar into a lower end part of the suspended partial meat block with skin,
a cutter device for removing the skin, including a skin feed roller having on its periphery claws for biting into the skin, a straight cutter for removing the skin located right behind a position where the claws bite into the skin and a servomotor for rotating the skin feed roller,
a pushing means for pushing the cutting device when to allow the claws of the skin feed roller into the skin and during skinning operation, and
a lifter unit for moving up and down the cutter device.

With the construction, the partial meat block with skin is suspended from the clamper device, rotational positioning of the suspended meat block is done, swing prevention measure is made, the cutter device is pushed toward the meat block to allow the claws of the skin feed roller of the cutter device to bite into the skin of the meat block, and skinning performed by rotating the skin feed roller by the servomotor.

By using the servomotor to rotate the skin feed roller, action and effect mentioned before can be obtained.

It is preferable that a meat holding unit having for example a resin made roller to be brought into contact with the partial meat block with skin to prevent swing thereof when swing prevention bar is inserted into the lower end part of the meat block and when the cutter device is pushed toward the meat block to allow the claws of the skin feed roller to bite into the skin.

By providing a skinning start position determining means which has at least two detection rollers moving along the surface of the partial meat block and a judging means to calculate inclination of the vertically extending ridge line of the partial meat block with skin based on detected positions of centers of the detection rollers and determine a position where rate of inclination of the ridge line exceeds a reference value as a position at which to start skinning, the position at which to start skinning can be determined automatically.

For example, in a case of skinning a pig thigh which has an ankle side portion where the skin surrounds all around and a hip side portion where the skin surround partly not all around. The portion at which to start skinning can be determined between the ankle side portion and hip side portion of the pig thigh by the skinning start position determining means.

By performing spiral skinning in the ankle side portion and horizontal skinning in the hip side portion, complete skinning of the pig thigh can be performed efficiently.

In the apparatus of the invention, the clamp shaft of the clamper device is rotatable in both directions and a plurality of air cylinders are provided so that the clamp device is rotated by rotating the clamp shaft to determine rotational position of the clamper device to determine rotational position of the suspended partial meat block with skin to insert swing prevention bar into the end part of the meat block so that the meat block can be rotated smoothly when performing skinning.

By composing the lifter unit to include a vertical ball screw on which the cutter device is engaged and a servomotor for rotating the ball screw in both directions to move up and down the cutter device, spiral skinning can be performed by the combination of the driving of the two servomotors.

By utilizing the performance characteristic of the servomotor to rotate the skin feed roller, rotation of the skin feed roller can be continued without being stopped even when driving torque of the meat block increases due to change in friction between the skin feed roller and the surface of the meat block, and even when the rotation of the skin feed roller stops due to excessive load, the servomotor can be easily restarted.

The cutter device used in the method and the apparatus of the present invention for removing skin of a partial meat block with skin of animal carcasses, comprising:
a cutter part including a skin feed roller having on its periphery claws for biting into the skin, a straight cutter for removing the skin located right behind a position where the claws bite into the skin, and a servomotor for rotating the skin feed roller in both rotation directions, and
a driving part which supports the cutter device swingable and rotatable so that the cutter device can follow along the curved surface of the partial meat block with skin.

The cutter device is composed such that when the rotating skin feed roller is pressed onto the partial meat block with skin, skin is spooled up by the claws of the skin feed roller in a gap between the claws and the straight cutter located just behind the claws, and the skin is removed as the skin feed roller together with a part of the fat layer.

As the cutter part is supported by the drive part swingably and rotatably, it can follow any curve along the surface of the meat block. As the skin feed roller has claws on its periphery, skinning can be started from the skinning start position on the surface of the meat block by allowing the claws to bite into the skin at the position at which to start skinning.

By driving the skin feed roller by the servomotor which is variable in rotation speed and has drooping characteristic in torque-rotation speed relation, rotation of the skin feed roller is continued without being stopped even when driving torque of the partial meat block with skin increases due to change in friction between the skin feed roller and the surface of the meat block, and even when the rotation of the skin feed roller stops due to excessive load, the servomotor can be easily restarted.

It is preferable that a side cutter is provided at least at an end of the skin feed roller to make incision into the skin to define a border line between a skin feed roller running region and outside of said region on the surface of the partial meat block with skin to ease removing of a strip of skin.

By this, resistance against removing of the strip of skin can be reduced and smooth skinning can be achieved.

Preferably each of the claws formed along the periphery of the skin feed roller is shaped to have a triangular or trapezoidal shape. By this, effective biting of the claws into the skin of the meat block can be achieved.

By adjusting a gap between the skin feed roller and the straight cutter, thickness of the removed strip of skin can be controlled.

Pressing force of the cutter part onto the partial meat block with skin can be adjusted by controlling air supply to and release from the cylinder by proportional solenoid valves, etc.

### EFFECT OF THE INVENTION

According to the invention, the partial meat block with skin is suspended in a state rotatable in both directions stably by supporting it by the clamper at its upper end part and by the swing prevention bar at its lower end part, and the cutter device is pressed onto the surface of the meat block, and skinning is performed with the straight cutter attached to the cutter device by rotating the skin feed roller by the servomotor to rotate the meat block by the rotation of the skin feed roller, so skinning operation is mechanically automated eliminating manual work.

As workers do not touch the partial meal block with skin when skinning it, sanitary problems can be eliminated and uniform skinning can be achieved with thickness of the removed strip of skin being even. By driving the skin feed roller of the cutter device by the servomotor, rotation of the skin feed roller can be continued without being stopped even when driving torque of the meat block increases due to change in friction between the skin feed roller and the surface of the meat block, so skinning operation can be performed smoothly to the end of the operation.

According to the invention, the apparatus comprises: a clamper device for suspending the partial meat block with skin, a centering unit for stabilizing and positioning the suspended partial meat block with skin to prepare for inserting a swing prevention bar thereinto, a swing prevention unit to prevent swing of the partial meat block with skin by inserting said swing prevention bar into a lower end part of the suspended partial meat block with skin, a cutter device for removing the skin, the device having a skin feed roller having on its periphery claws for biting into the skin, a straight cutter for removing the skin located right behind a position where the claws bite into the skin and a servomotor for rotating the skin feed roller, a pushing means for pushing the cutting device when to allow the claws of the skin feed roller into the skin and during skinning operation, and a lifter unit for moving up and down the cutter device; so skinning is performed automatically while allowing the cutter device to follow the surface of the partial meat block with skin without manual work.

By driving the skin feed roller by the variable speed servomotor, rotation of the skin feed roller can be continued without being stopped even when driving torque of the meat block increases due to change in friction between the skin feed roller and the surface of the meat block.

Spiral skinning can be performed by the combination of driving of the servomotor for driving the skin feed roller and that for driving the lifter unit to move up and down the cutter device.

The cutter device used in the invention comprises: a cutter part including a skin feed roller having on its periphery claws for biting into the skin, a straight cutter for removing the skin located right behind a position where the claws bite into the skin, and a servomotor for rotating the skin feed roller in both rotation directions, and a driving part which supports the cutter device swingable and rotatable so that the cutter device can follow along the curved surface of the partial meat block with skin; so skinning can be performed while allowing the cutter device to always follow the surface of the partial meat block with skin, and skinning operation can be performed smoothly to the end of the operation.

By providing a side cutter at least at an end of the skin feed roller to make incision into the skin to define a border line between a skin feed roller running region and outside of said region on the surface of the partial meat block with skin to ease removing of a strip of skin, resistance against removing of the strip of skin can be reduced and smooth skinning can be achieved.

### BRIEF DESCRIPTION OF THE DRAWINGS

FIG.1 is a front elevational view of an embodiment of the skinning apparatus according to the invention
FIG.2 is a front elevational view of a pig thigh 'w' and the clamper device 10 of the apparatus with the thigh 'w' clamped at its ankle by the clamper device 10.
FIG.3 is a side elevational view in the swing preventing step.
FIG.4 is a front elevational view in the swing preventing step.
FIG.5 is a front view in the measuring step at the skinning operation starting position.
FIG. 6 is a front view when the cutter device 30 is positioned where the cutter device bites at the skin.
FIG.7 is a front view in the horizontal skinning step.
FIG.8A is a drawing for explaining skinning operation showing when the straight cutter 36 starts to contact the fat layer under the skin of the pig thigh 'w'.
FIG.8B is a drawing for explaining skinning operation showing when the straight cutter 36 starts biting at the fat layer 'l' under the skin 'h' of the pig thigh 'w'
FIG.8C is a drawing for explaining skinning operation showing when the straight cutter 36 starts skinning the pig thigh.
FIG.9 is a front view in the horizontally removed strip of skin cutting step.
FIG.10 is a front view in the determining step of position of the clamper.
FIG.11 is a plan view of the clamper rotation position determining step.
FIG.12 is a side elevational view in the thigh fixing step to prevent swing of the thigh 'w'.
FIG.13 is a front elevational view in the thigh fixing step to prevent swing of the thigh 'w'.
FIG.14 is a front view showing when the cutter device 30 is moved vertically.
FIG.15 is a front view when the cutter device 30 is moved horizontally to a position where the cutter device bites at the skin.
FIG.16 is a front view in the spiral skinning step.
FIG.17 is a front view in the spirally removed strip of skin cutting step.
FIG.18 is a plan view of the cutter part 31 of the cutter device 30.
FIG.19 is a partially sectional view of cuter part 31 of FIG.18.
FIG.20 is a partially sectional view of skinning tool 32 of the cutter part 31.
FIG.21 is a plan view of the cutter device 30.
FIG.22 is a side view of the cutter device with the cutter part 31 removed.

### EXPLANATION OF REFERENCE CHARACTERS

- 10: Clamper device
- 12: Clamper shaft
- 14: Clamper rotation position determining device
- 22,23: Detection roller
- 25: Inclination calculation device
- 30: Cutter device
- 31: Cutter part
- 34: Skin feed roller driving servomotor
- 35: Skin feed roller
- 35a: Claw
- 35c: side cutter
- 36: Straight cutter for skinning
- 41: Driving part
- 61: Air cylinder(pushing means)
- 70: Lifter unit
- 71: Ball screw
- 72: Cutter device lifting and lowering servomotor
- 80: Swing prevention unit
- 81: Swing prevention bar
- 90: Centering unit
- 100: Meat block holding unit
- 101: Back support roller
- 141, 142: Clamper rotation position determining cylinder
- 141a, 142a: Clamper rotation position determining cylinder rod
- w: Pig thigh

### BEST EMBODIMENT FOR IMPLEMENTING THE INVENTION

A Preferred embodiment of the present invention will now be detailed with reference to the accompanying drawings. It is intended, however, that unless particularly specified, dimensions, materials, relative positions and so forth of the constituent parts in the embodiments shall be interpreted as illustrative only.

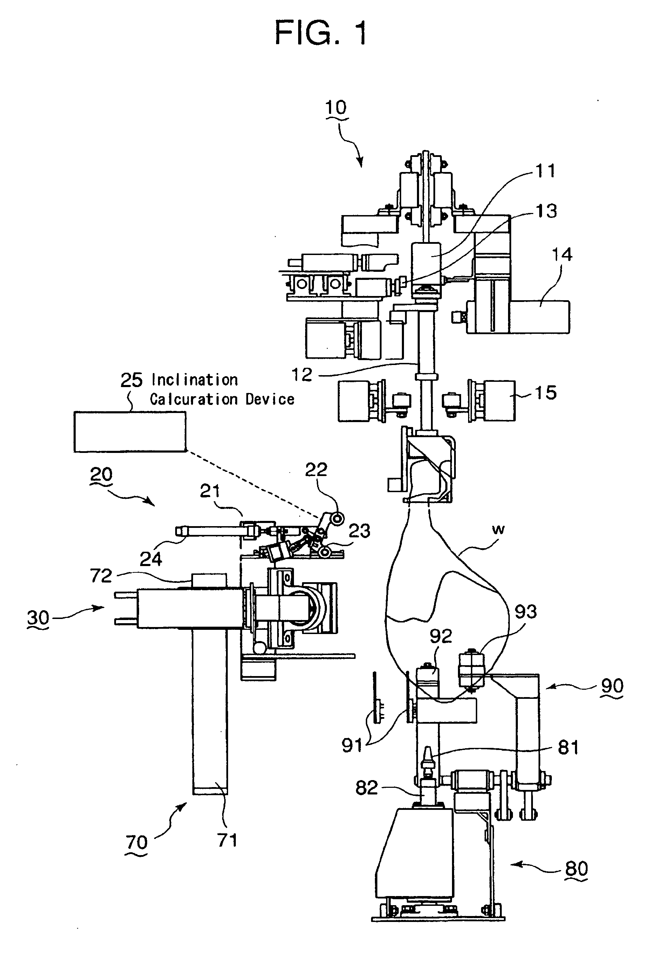

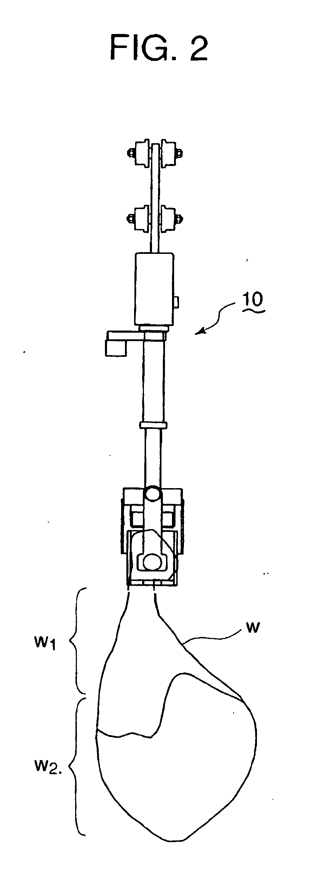

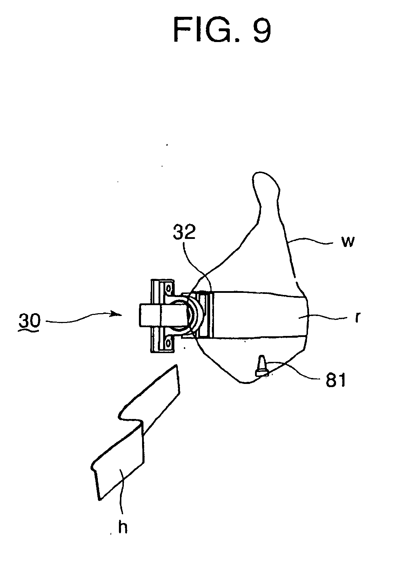

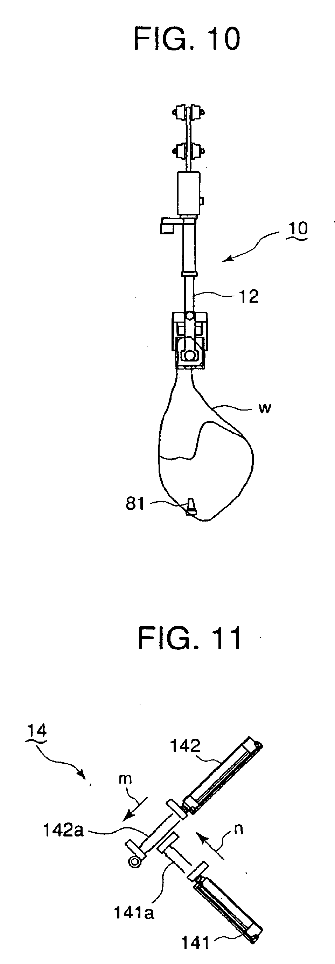

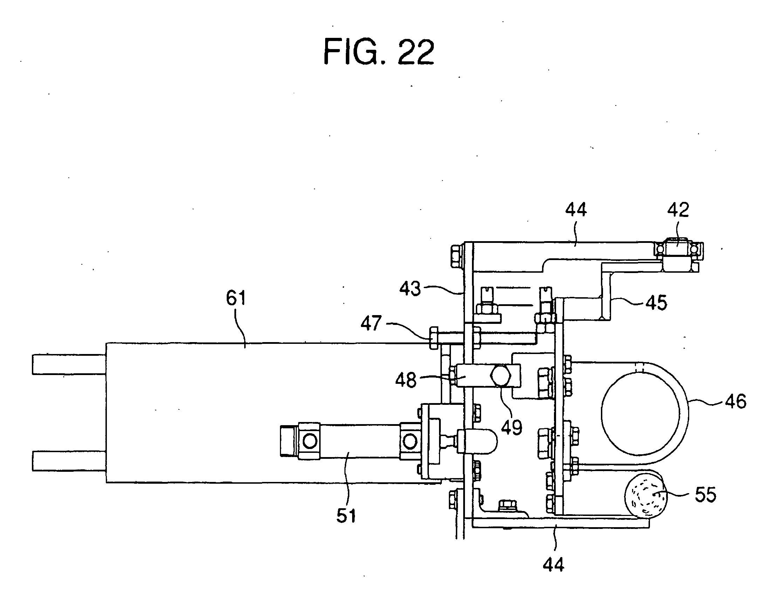

The embodiment of the present invention will be explained with reference to FIGS.1 to 22. This embodiment is suited for skinning a pig thigh 'w'. Referring to FIGS.1 and 2, a clamper device 10 for suspending the pig thigh 'w' clamping it at the ankle includes a clamper 11 and a clamp shaft 12. The clamper device is fixed by a clamper fixing device 13. A clamper rotation position determining device 14 includes two air cylinders as shown in FIG.11. The clamper shaft 12 can be rotated maximum 180 degrees around by cylinder rods 141a and 142a of each of the air cylinders 141 and 142 to allow a skinning start position on the thigh 'w' to face a cutter device 30 moved to determined position.

A measuring unit 20 includes a pair of detection rollers 22 and 23 each supported by an arm, a supporting member 21 for supporting the arm swingablly so that the pair of detection rollers can be moved along the surface of the thigh 'w' always contacting the surface, an air cylinder 24 for advancing/retreating the supporting member 21, and an inclination calculation device 25, the measuring unit 20 being liftable, i.e. able to be moved up and down. Relative position of the detection rollers 22 and 23 is detected when the rollers are moved along the surface of the thigh 'w', and inclination of the surface is calculated by the inclination calculation device 25 based on the detected relative position. A position at which rate of change of inclination exceeds a reference value is determined to be a position at which to start skinning.

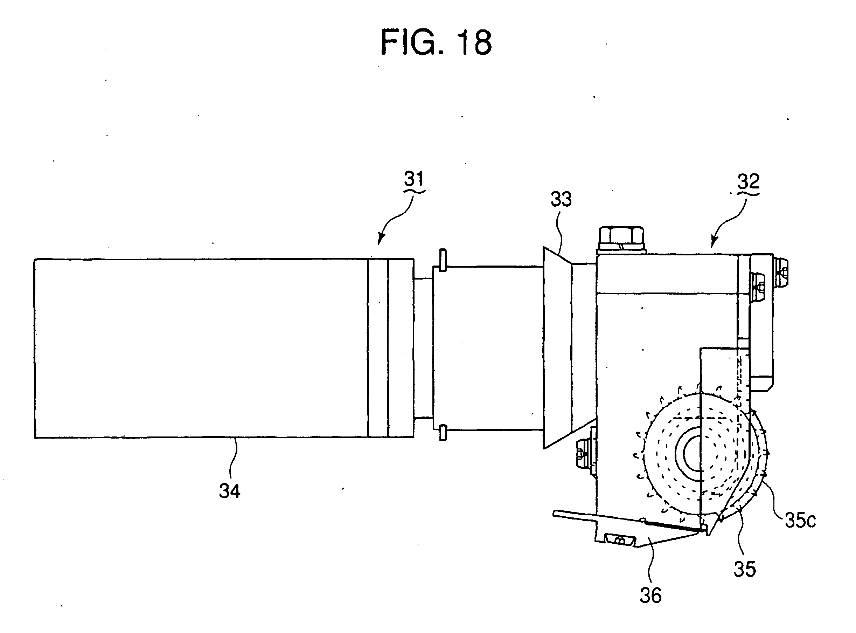

As shown in FIGS 18 to 22, the cutter device 30 includes a cutter part 31, and a driving part 41 where the cutter part 31 is supported swingable in directions of 'a' around a swing center shaft 42. An air cylinder 61 advances/retreats the cutter part 31 in directions of 'b' and can push the cutter part 31 so that a skin feed roller mentioned later is pushed against the thigh 'w' by air pressure. The air pressure can be adjusted by controlling air supply to and release from the cylinder by proportional solenoid valves not shown in the drawings.

The swing center shaft 42 is supported for rotation by a bracket 44 protruding from a base plate 43 attached to a cylinder rod of the air cylinder 61, and the cutter part 31 is fixed to a bracket 45, to which the swing center shaft 42 is fixed, by the intermediary of a support block 46.

The cutter part 31 is comprised of a skinning tool 32 supported for rotation by the support block 46 via a bearing 33 made of synthetic resin and a servomotor 34 connected to the skinning tool 32 to drive it.

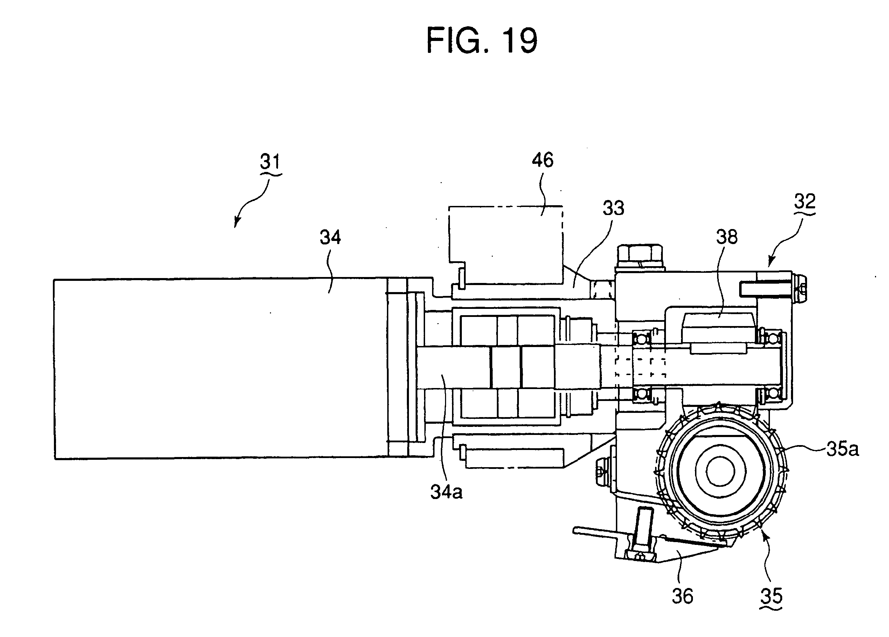

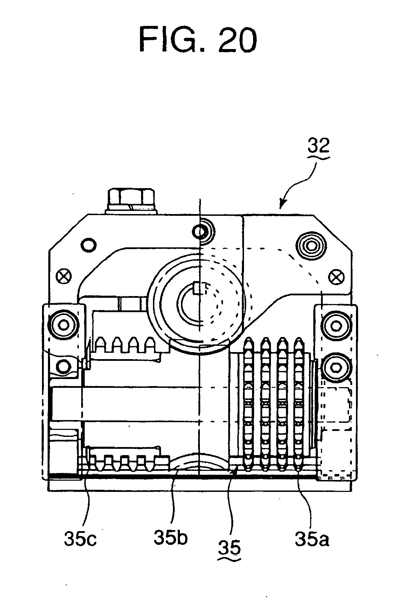

The skinning tool 32 has a skin feed roller 35 having a plurality of claws 35a which bite at the surface of the thigh 'w' and a straight cutter 36 disposed just behind skin feed roller 35 so that it performs skinning of the thigh 'w' which is rotated with its skin bitten at with the claws 35a as the skin feed roller 35 rotates. As shown in FIG.19, a drive shaft 34a of the servomotor 34 is supported for rotation by bearing 33 made of synthetic resin and extends into the skinning tool 32, and a worm gear 38 is attached at the end part of the drive shaft 34a. The worm gear 38 meshes with a gear 35b(see FIG.20)of the skin feed roller 35 to rotate the skin feed roller 35.

A side cutter 35c is provided at an end of the skin feed roller 35 (at the left side end in FIG.20 which is disposed topside when the spiral skinning is performed toward the ankle of the thigh 'w').

A first stopper 47 for setting the nearest position the bracket 45 approaches the base plate 43 is provided on the base plate 43, and a second stopper 49 is provided on a L-shaped plate 48 attached to the base plate 43. The second stopper 49 serves to prevent excessive swing of the skinning tool 32 in anticlockwise direction by abutment of a piece 54 attached to the bracket 45 on the second stopper.

A tension spring 50 connect the bracket 44 and bracket 45 to pull the bracket 45 toward the base plate 43 to maintain the skinning tool 32 in position.

An air cylinder 51 attached to the base plate 43 serves to push with its cylinder rod 51a an end part 45a of the bracket 45 to allow the skinning tool 32 to swing when a removed strip of skin is cut. An air cylinder 53 and an air cylinder 52 for determining a first position and a second position of the skinning tool 32 are attached to the bracket 45. These cylinders push with its a cylinder rods 53a or 52a respectively the skinning tool 32 to incline it so that it matches the ridge of the partial meat block 'w' with skin when the skinning tool bites at the surface thereof. The air cylinder 52 serves to increase inclination angle of the skinning tool 32 and the air cylinder 53 serves to decrease inclination angle of the skinning tool 32.

For example, when matching the skinning tool 32 to the ridge of lower part 'w2' of the thigh 'w', inclination of the ridge line is large in this region, so the air cylinder 52 is activated to incline the skinning tool 32 to match the inclination of ridge line in this region, and when matching the skinning tool 32 to the ridge of upper part 'w1' of the thigh 'w', inclination of the ridge line is small in this region 'w1', so the air cylinder 53 is activated to incline the skinning tool 32 to match the inclination of ridge line in this region.

Reference numeral 55 is a subsidiary roller to support the inclination of the bracket and subserve swinging of the skinning tool 32.

A lifter unit 70 includes a ball screw 71 on which the cutter device 30 is threadably mounted and a cutter device lifting and lowering servomotor 72 for rotating the ball screw 71 to lift and lower the cutter device 30.

A swing prevention unit 80 includes a swing prevention bar 81 provided to be vertically movable and a lifting and lowering device 82 for lifting and lowering the swing prevention bar 81 and serves to support the lower end part of the suspended thigh 'w' in order to prevent swing or excess rotation of the thigh when rotating the clamper 11 to rotate the thigh hanging from the clamper.

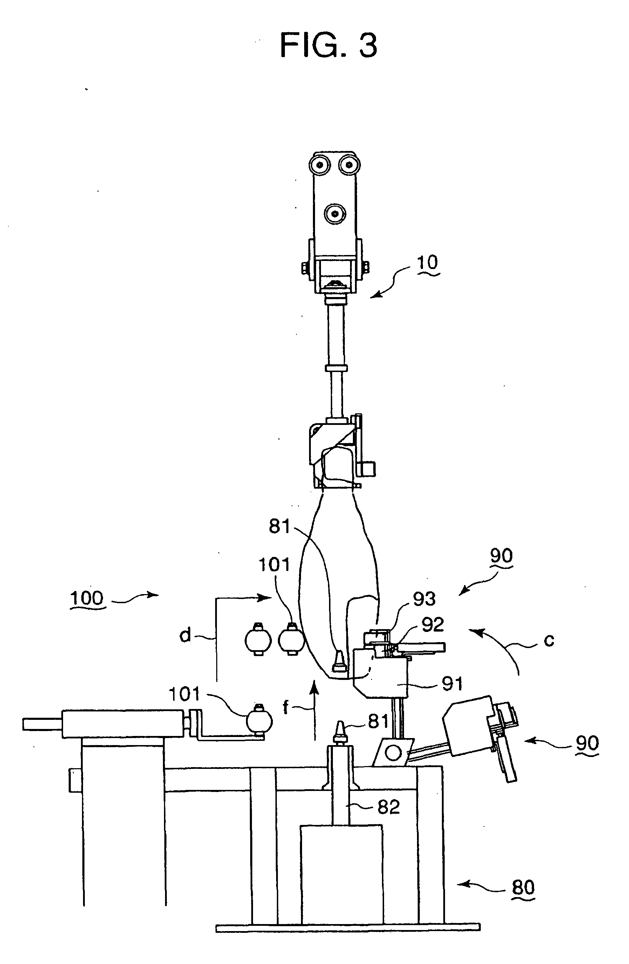

As shown in FIG.3, a centering unit 90 includes a hipbone pushing plate 91, front support roller 92, and biting support roller 93, the unit being able to be forwarded and retreated along an arrow c. A meat block holding unit 100 has a back support roller 101 which is supported able to be moved up and down and advanced toward and retreated from the thigh 'w' and used for positioning of the cutter device 30 when allowing the claws 35a of the skin feed roller 35 to bite at the surface of the thigh 'w'.

Next, skinning process will be explained.

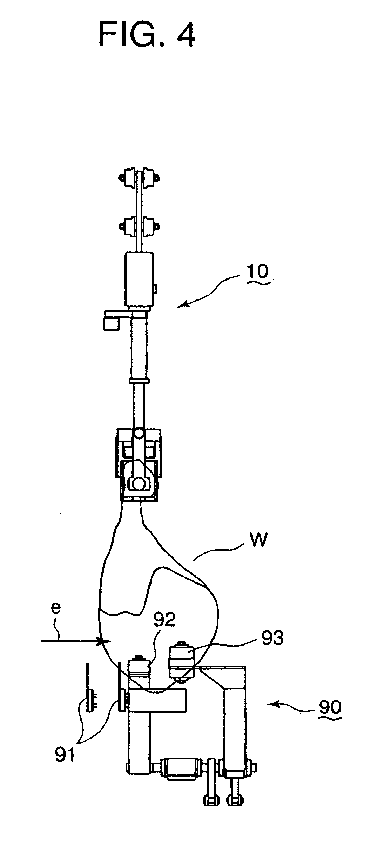

First, the thigh 'w' is attached to the clamper 11 to be suspended from the clamper device 10 as shown in FIG.2. Then, as shown in FIGS.3 and 4, the centering unit 90 having the hipbone pushing plate 91, front support roller 92, and biting support roller 93 and the work holding unit 100 having the back support roller 101 are moved in the direction of c and d respectively to allow them to contact the thigh 'w' to perform centering for skinning the lower part 'w2' of the suspended thigh 'w'.

The centering unit 90 serves to perform positioning of the thigh 'w' in order to allow the swing prevention bar 81 to be inserted into the lower end of the suspended thigh 'w'.

The suspended thigh 'w' is apt to incline toward left, so it is stabilized by moving the centering unit 90 in the direction c so that the rollers 92 and 93 contact the surface of the thigh 'w' and then moving the hipbone pushing plate 91 in a direction e to push the hipbone part toward right. Then the swing prevention bar 81 is moved up to be inserted into the lower extremity of the stabilized thigh 'w'. The positioning is performed taking the cutting plane of the hipbone as the reference plane in order to evade influence due to individual difference of thighs. The front support roller 92 serves to stop back and forth swing(in a direction perpendicular to the paper plane) of the thigh 'w', and the biting support roller 93 serves to help the claws 35a of the skin feed roller 35 bite at the surface of the thigh 'w' by pushing the thigh 'w' forward(in a direction perpendicular to the paper plane) when the skinning tool 32 is pressed onto the surface of the thigh 'w', the biting support roller being movable to push the thigh with the front support roller 92 contacting the thigh.

Then the swing prevention bar 81 is moved up vertically in direction f to insert the lower end part of the thigh 'w', and then the centering unit 90 is moved down. The thigh 'w' supported by the clamper device 10 and swing prevention bar 81 at the upper and lower ends thereof, so it can be rotated stably in both directions.

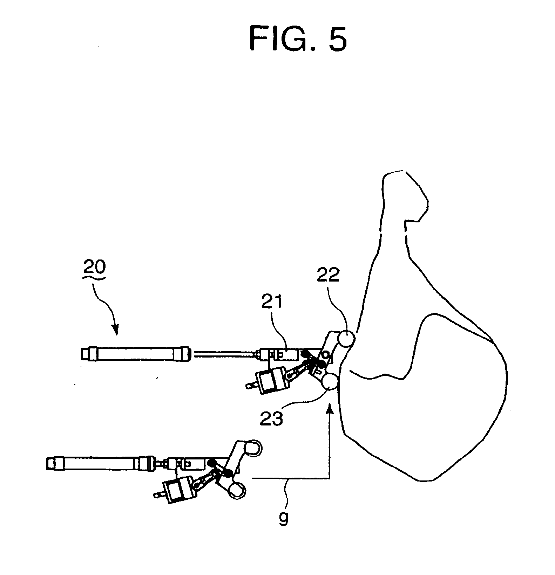

Next, measurement is performed to determine a position at which to start skinning operation. Referring to FIG. 5, first the biting support roller 93 is brought to contact to the thigh 'w' to prevent it from swinging. Then, a pair of detection rollers 22 and 23 of the measuring unit 20 are moved as shown by an arrow g to bring the rollers to contact the surface of the thigh 'w', and the pair of rollers is moved up or down along the thigh 'w' with the rollers contacting the surface of the thigh 'w'. Center positions of the rollers are detected based on the swing angle of the arm supporting the rollers 22 and 23 and inclination of the surface of the thigh 'w' is calculated.

A position at which rate of change of inclination exceeds a reference value is determined as a position to start skinning.

Upper part above the position to start skinning is the ankle side region 'w1' which is surrounded all around by the skin and the skinning is performed spirally upwardly by moving the cutter device upward while allowing it to contact the circumference of the thigh rotated by the skin feed roller 35 in this region. Lower part below the position to start skinning is the region 'w2' which is not surrounded all around by the skin and skinning is performed horizontally in this region by allowing the thigh to rotate by about 180 degrees to remove a strip of skin by every about 180 degrees rotation of the thigh.

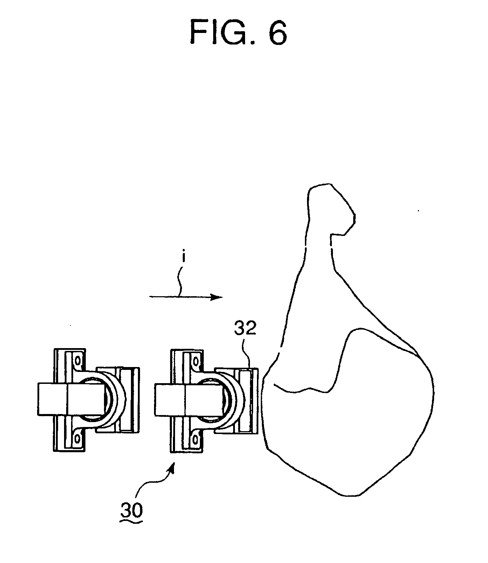

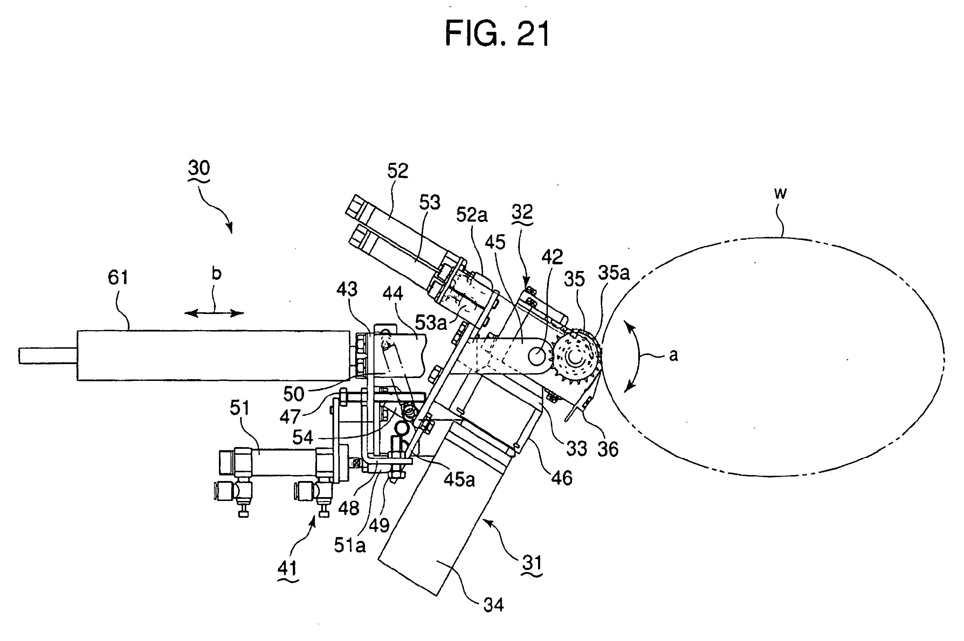

After the position to start skinning is determined, the cutter device 30 is moved in the direction i to the position to start skinning as shown in FIG.6 with the biting support roller 93 contacting the thigh 'w', then the air cylinders 52 and 53(see FIG.21) are activated to allow the skinning tool 32 to incline parallel to the ridge line of the thigh 'w' at the position to start skinning, then the skinning tool 32 is brought to contact to the thigh 'w' so that the claws 35a of the skin feed roller 35 of the skinning tool 32 bite into the surface of the thigh 'w' and the thigh 'w' is rotated by rotating the skin feed roller 35 while the cutter device 30 is pushed toward the thigh 'w' so that the claws 35a always bite into the thigh surface of the thigh 'w' and rotate it as the skin feed roller 35 rotates. In the embodiment, the claws 35a are triangularly shaped, so the claws can effectively bite into the skin.

When allowing the claws 35a to bite into the skin at the start of skinning, pushing force of the air cylinder 61 to press the skin feed roller 35 of the skinning tool 32 onto the surface of the thigh 'w' is determined to be larger and rotation speed of the skin feed roller 35 to be smaller than when skinning is performed.

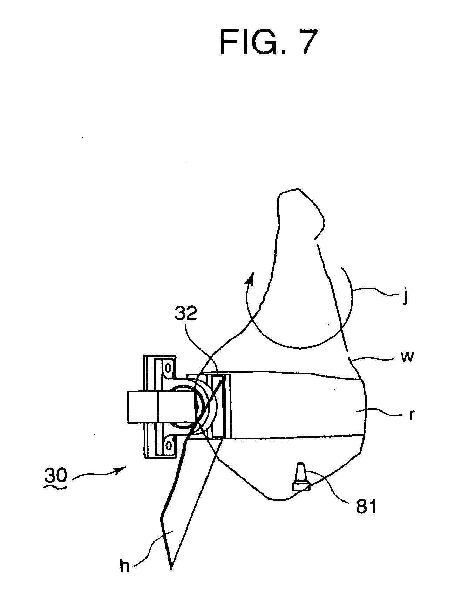

Next, as shown in FIG.7, skinning of the lower part below the position to start skinning is performed horizontally by the skinning tool 32. On this occasion, first the biting support roller 93 contacting the thigh 'w' is retreated to be departed from the thigh 'w' so that the thigh 'w' can be rotated freely in both rotation directions. Then, the thigh 'w' is rotated in direction j by about 180 degrees by rotating the skin feed roller 35 of the skinning tool 32 by the servomotor 34 to remove the skin 'h' horizontally, the skinned part being indicated by a reference character 'r'.

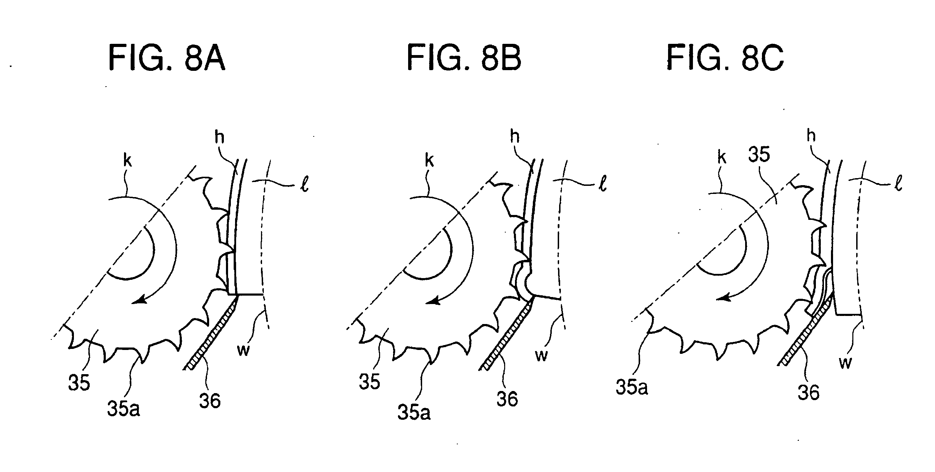

Removing of the skin by the straight cutter 36 provided to the skinning tool 32 is shown in FIGS.8A to 8C. The straight cutter 36 is located right behind the claws 35a of the skin feed roller 35 at a position the claws 35a bite into the skin.

FIG.8A shows a state that the claws 35a of the rotating skin feed roller 35 rotating in direction k bite at the skin of the thigh 'w' and the straight cutter 36 for removing the skin starts to contact the fat layer under the skin of the thigh 'w'

FIG.8B shows a state the skin is fed by the rotation of the skin feed roller 35 and the straight cutter 36 starts biting at the fat layer '1' under the skin 'h' of the pig thigh 'w'.

FIG.8C shows a state removing of the skin with the straight cutter 36 begins.

As shown in FIGS.8A to 8C, when the rotating skin feed roller 35 is pressed onto the thigh 'w', skin 'h' is spooled up by the claws 35a of the skin feed roller 35 in a gap between the claws 35a and the straight cutter 36, and the skin is removed as the skin feed roller 35 rotate while rotating the thigh 'w'.

The skin is removed together with a part of the fat layer.

Skinning can be performed more cleanly when the thigh 'w' is rotated by the rotation of the skin feed roller with its claws biting into the skin as compared with a case when the thigh 'w' is rotated forcibly by other means. Thickness of remove strip of skin can be adjusted by distance between the edge of the claw and the cutting edge of the straight cutter 36. Experiments verified that thickness of the removed strip of skin is not thicker than 4mm when the distance between the edge of the claw and the cutting edge of the straight cutter 36 is 1.8mm.

When skinning of the lower part of the suspended thigh 'w', cutting of the skin removed from the thigh 'w' is performed by retreating the skinning tool 32 while rotating the skin feed roller 35 and swinging the skinning tool 32 by the air cylinder 51 shown in FIG,21.

Next, as shown in FIGS. 10 and 11, the clamp shaft 12 is rotated by moving the cylinder rods 141a and 142a of the air cylinder 141 and 142 respectively in direction n and m respectively to allow the thigh 'w' to face the measuring unit 20, then the position to start skinning is determined, and the cutter 30 is positioned to face the thigh 'w'.

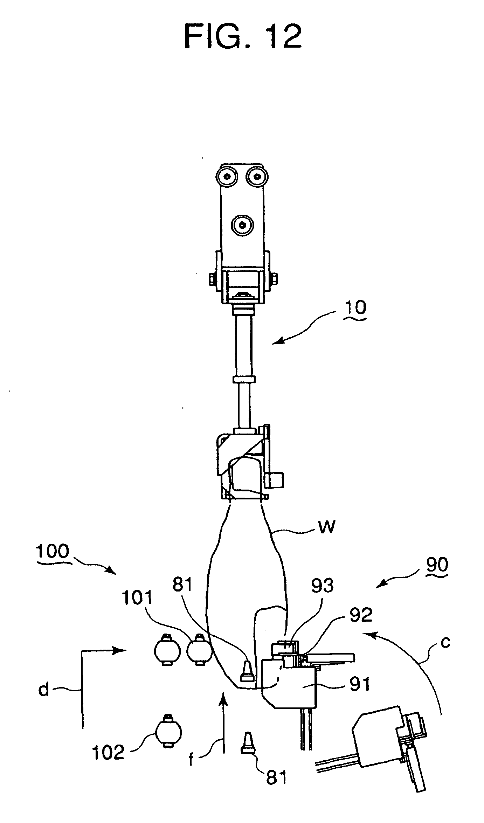

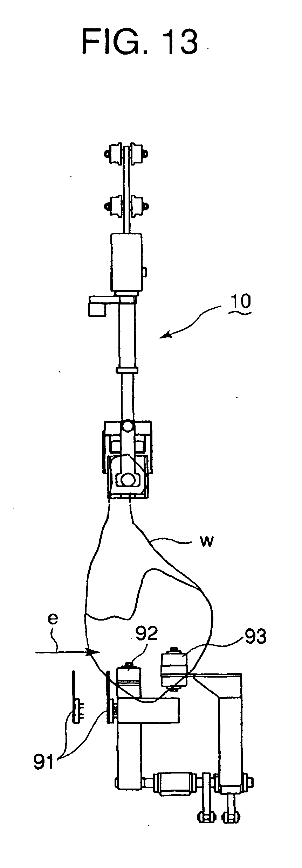

Then, as shown in FIGS.12 and 13, the centering unit 90 having the hipbone pushing plate 91, front support roller 92, and biting support roller 93 is swung in direction c and at the same time the work holding unit 100 having the back support roller 101 are moved in direction d to allow the rollers to contact the thigh 'w' to perform centering for skinning the upper part 'w1' of the suspended thigh 'w'.

After the centering unit 90 is swung in direction c the hipbone pushing plate 91 is moved in direction e to bring it to contact to the thigh 'w' to prevent swinging of the thigh 'w', back and forth swing (in a direction perpendicular to the paper plane of FIG.13) being prevented by the front support roller 92.

When centering of the thigh 'w' is finished, swing prevention bar 81 of the swing prevention unit 80 is moved up vertically in direction f to insert it into the lower end part of the thigh 'w', then the centering unit 90 is retreated. The thigh 'w' is supported by the clamper device 10 and swing prevention bar 81 at the upper end part and lower end part thereof respectively, so it suspends from the clamper device 10 stably rotatably in both directions.

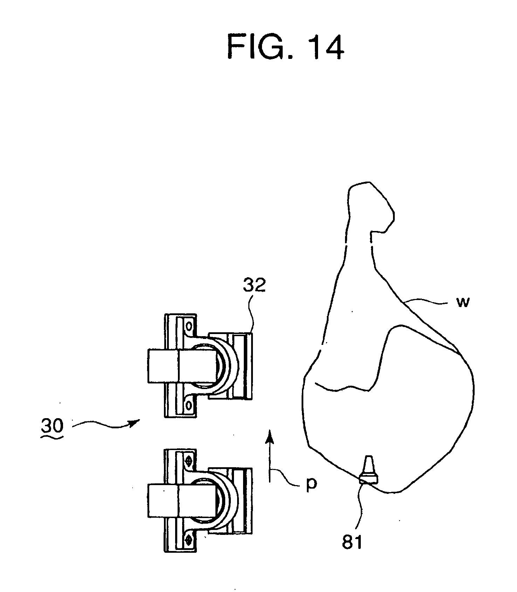

Then, the cutter device 30 is moved in direction p to the position to start skinning as shown in FIG.14.

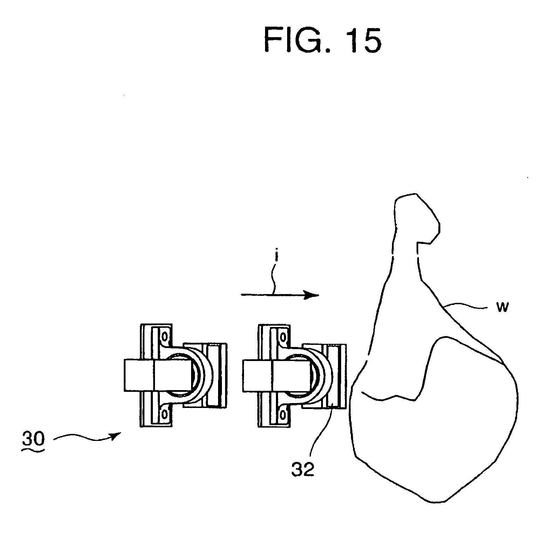

Next, as shown in FIG.15, the cutter device 30 is moved in direction i so that the skin feed roller 35 of the skinning tool 32 of the cutter device 30 to contact the thigh 'w' at the position to start skinning and the claws 35a of the skin feed roller 35 bites into the surface of the thigh 'w' so that the claws 35a of the skin feed roller 35 bite into the surface of the thigh 'w' and the thigh 'w' is rotated by rotating the skin feed roller 35 while the cutter device 30 is pushed toward the thigh 'w' so that the claws 35a always bite into the thigh surface of the thigh 'w' and rotate it as the skin feed roller 35 rotates.

When allowing the claws 35a to bite into the skin at the start of skinning, pushing force of the air cylinder 61 to press the skinning tool 32 onto the surface of the thigh 'w' is determined to be larger and rotation speed of the skin feed roller 35 to be smaller than when skinning is performed.

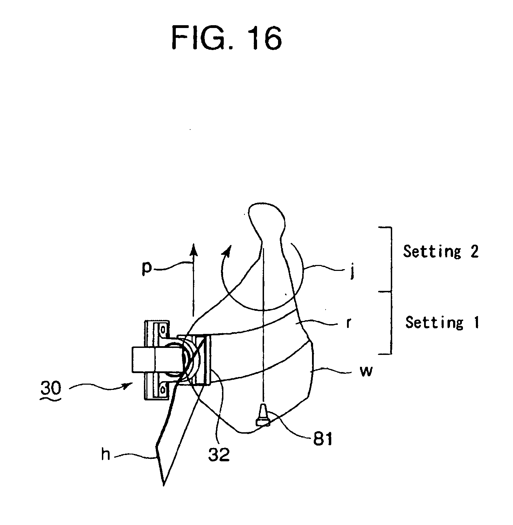

Then, skinning of upper region 'w1' above the position to start skinning is performed. As shown in FIG.16, upwardly spiraling skinning is performed by rotating the thigh 'w' in direction j by the rotation of the skin feed roller with its claws biting into the skin while moving up the cutter device 30 vertically in direction p by the lifter unit 70. On this occasion, the skin feed roller 35 of the skinning tool 32 is rotated at a rotation speed slower than that when the claws 35a of the skin feed roller 35 are allowed to bite into the skin and the cutter device 30 is pushed toward the thigh 'w' by the air cylinder 61 at a force smaller than that when the claws 35a of the skin feed roller 35 are allowed to bite into the skin. It is preferable to set these conditions in two stages. Besides, the lifter unit 70 is controlled so that speed of lifting the cutter device 30 is increased as diameter of the thigh 'w' decreases as the cutter device 30 moves up.

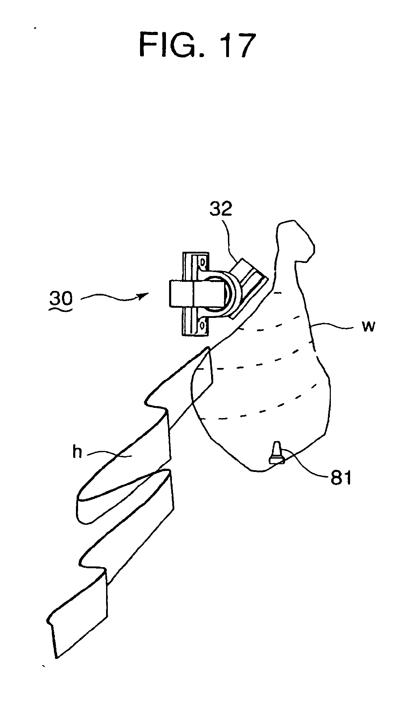

When skinning is performed to the ankle part of the thigh 'w' as shown in FIG.17, skin cutting step is performed. The air cylinder 51 for cutting the remove strip of skin is activated and the strip of skin h is cut by allowing the cylinder rod 51a to push the end part 45a of the bracket 45 and swing the skinning tool 32 while allowing it to be retreated.

Lastly, the swing prevention bar 81 is moved down, the thigh 'w' is removed manually from the clamper device 10. Now, skinning operation of the thigh 'w' is finished, and determination of position to start skinning of the thigh by rotating the clamp shaft 12 is done as shown in FIGS.10 and 11.

According to the embodiment, skinning operation of the pig thigh 'w' is automated and operation efficiency can be considerably increased as compared with manual operation. As skinning operation is carried out in a state the thigh 'w' is suspended from a clamper device without touched by worker' s hands, there is no fear of attaching of bacteria to the surface of the thigh, and skinning is carried out sanitarily and at the same time uniform skinning is made possible by the mechanized skinning operation.

By composing the apparatus such that the thigh 'w' is rotated by the rotation of the skin feed roller 35 of the skinning tool 32 and separate driving means to rotate the thigh 'w' is used, facilitation and energy saving of skinning operation can be achieved.

The work holding plate 100, centering unit 90, and other pusher members are disengaged from the thigh 'w' and the thigh is rotated when removing the skin from the thigh, the thigh can be rotated lightly without interfered with those members.

Contact pressure of the skin feed roller 35 of the skinning tool 32 is adjusted by controlling air flow to and release from the air cylinder 61 so that the contact pressure is larger when the claws 35a of the skin feed roller 35 are allowed to bite into the surface of the thigh 'w' than when the thigh 'w' is rotated by the rotation of the skin feed roller 35, the claws 35a can be stuck into the skin reliably and the thigh 'w' can be rotated smoothly, resulting in smooth and efficient skinning.

As the skin feed roller 35 of the cutter device 30 is rotated by the servomotor 34 which is variable in rotation speed and has drooping characteristic in torque-rotation speed relation, rotation of the skin feed roller 35 is continued without being stopped even when driving torque of the thigh 'w' increases due to change in friction between the skin feed roller and the surface of the thigh, and even when the rotation of the skin feed roller 35 stops due to excessive load, the servomotor can be easily restarted.

By allowing the detection rollers 22 and 23 to move along the boundary region between the ankle side region `w1' where the skin surround all around the thigh 'w' and the hip side region 'w2' where the skin does not surround all around the thigh 'w', inclination of the ridge line of the surface of the thigh 'w' is detected continuously, a position where rate of change of inclination exceeds a reference value is determined to be a position at which to start skinning, the skin in the ankle side region 'w1' is removed by the straight cutter 36 of the cutter device 30 by rotating the thigh 'w' by rotating the skin feed roller 35 of the skinning tool 32 of the cutter device 30 while lifting the cutter device 30 to perform upwardly spiraling removing of a strip of the skin with the lifting speed increased as the straight cutter approaches the ankle where circumferential length decreases, and the skin in the hip side region 'w2' is removed horizontally by the straight cutter 36 of the cutter device 30 by rotating the thigh 'w' by rotating the skin feed roller 35 of the skinning tool 32 of the cutter device 30, skinning of all around the pig thigh 'w' can be performed efficiently.

In the embodiment, the cutter device 30 is moved up and down by rotating the ball screw 71 of the lifter unit 70 by the servomotor 72, lifting speed of the cutter device 30 can be adjusted by changing the rotation speed of the servomotor, pitch of the spiral can be selected arbitrary by combination of rotation speed of the servomotor 72 and that of the servomotor 34 for driving the skin feed roller 35.

As the claws 35a of the skin feed roller 35 of the skinning tool of the cutting device 30 are triangularly shaped, the claws can effectively bite into the skin, and as the skinning tool 32 is swingable and rotatable in relation to the driving part 41, it can follow any curve along the surface of the thigh 'w'.

As the side cutter 35c is provided to cut the skin at the boundary between the region where the skin is removed and the region above it when removing the strip of skin spirally upwardly in the region 'w1' of the thigh 'w', resistance against removing of the spiral strip of skin can be substantially reduced and smooth skinning can be achieved.

### INDUSTRIAL APPLICABILITY

According to the invention, a method and apparatus for removing the skin from a partial meat block with skin of animal carcasses is provided with which skinning operation is automated to increase operation efficiency and eliminate sanitary problems.

## Claims

1. A method of skinning a partial meat block with skin of animal carcasses by allowing a cutter device (30) to follow along the surface of the skin comprising:
a suspending step to suspend the partial meat block with skin to a clamper device (10), determine rotational position of the clamped device to determine rotational position of the partial meat block with skin,
a cutter device (30) positioning step to push the cutter device (30) toward the partial meat block with skin so that claws (35a) formed on the periphery of a skin feed roller (35) of the cutter device (30) bite into the skin of the partial meat block with skin, and
a skinning step to remove the skin with a straight cutter (36) attached to the cutter device (30) while rotating the partial meat block of which the skin is bitten into with the claws (35a) of the skin feed roller (35) of the cutter device (30) by rotating the skin feed roller (35) by a servomotor (34),
**characterized in that** the suspending step further comprises inserting a swing prevention bar (81) into a lower end part of the partial meat block with skin so that it is stably rotatable around a center line passing the center of the swing prevention bar (81) and the center of suspension of the partial meat block with skin to the clamper device (10).

2. A method according to claim 1, wherein further provided after said skinning step;
a skin cutting step to cut a removed strip of skin by allowing the cutter device (30) to be retreated while allowing the skin feed roller (35) to rotate, and
a removing step to remove the partial meat block with skin removed from the clamp device.

3. A method according to claim 1, wherein the cutter device (30) is positioned in a state the partial meat block with skin is held by means of pushing rollers and skinning is performed after the pushing rollers are disengaged from the partial meat block with skin.

4. A method according to claim 1, wherein pushing force to push the cutter device (30) is increased when positioning the cutter device (30) so that claws (35a) formed on the periphery of a skin feed roller (35) of the cutter device (30) bite into the skin of the partial meat block with skin and decreased when skinning is performed by rotating the partial meat block with skin by the rotation of the skin feed roller (35).

5. A method according to claim 1, wherein a rotational position of the partial meat block with skin to start skinning is determined by rotating a clamp shaft of the clamper device (10) in the cutter device (30) positioning step.

6. A method according to claim 1, wherein the cutter device (30) follows relative to the partial meat block with skin along the surface thereof to perform removing a strip of skin spirally upwardly by combination of rotation of the skin feed roller (35) and lifting of the cutter device (30).

7. A method according to claim 1, wherein
said partial meat block with skin of animal carcasses is a pig thigh, the pig thigh is suspended from the clamper device (10) with its ankle clamped by a clamper of the clamper device (10),
a position on the surface at a middle part of the pig thigh between the ankle and hip side where rate of change of inclination of a vertically extending ridge line of the suspended pig thigh relative to the vertical line exceeds a reference value is determined as a position at which to start skinning,
the skin in an upper region above said position at which to start skinning is removed by the straight cutter (36) of the cutter device (30) by rotating the thigh by rotating the skin feed roller (35) of the skinning tool of the cutter device (30) while lifting the cutter device (30) to perform upwardly spiraling removing of a strip of the skin with the lifting speed increased as the straight cutter (36) approaches the ankle, and
the skin in the hip side region below said position at which to start skinning is removed horizontally by the straight cutter (36) of the cutter device (30) by rotating the thigh by rotating the skin feed roller (35) of the skinning tool of the cutter device (30).

8. An apparatus for skinning a partial meat block with skin of animal carcasses using a cutter device (30), comprising:
a clamper device (10), suspending the partial meat block with skin,
a centering unit (90), stabilizing and positioning the suspended partial meat block with skin to prepare for inserting a swing prevention bar (81) thereinto,
a cutter device (30) for removing the skin, the device including a skin feed roller (35) having on its periphery claws (35a) for biting into the skin, a straight cutter (36) for removing the skin located right behind a position where the claws (35a) bite into the skin and a servomotor (34) for rotating the skin feed roller (35),
a pushing means for pushing the cutting device when to allow the claws (35a) of the skin feed roller (35) to bite into the skin and during skinning operation, and
a lifter unit (70) for moving up and down the cutter device (30),
**characterized in that** the apparatus further comprises a swing prevention unit (80), preventing swing of the partial meat block with skin by inserting said swing prevention bar (81) into a lower end part of the suspended partial meat block with skin.

9. An apparatus according to claim 8, wherein a meat block holding unit (100) having a roller to be brought into contact with the partial meat block with skin to prevent swing thereof when the cutter device (30) is pushed toward the partial meat block with skin to allow the claws (35a) of the skin feed roller (35) to bite into the skin.

10. An apparatus according to claim 8, wherein a skinning start position determining means is provided which has at least two detection rollers moving along the surface of the partial meat block and a judging means to calculate inclination of the vertically extending ridge line of the partial meat block with skin based on detected positions of centers of the detection rollers and determine a position where rate of inclination of the ridge line exceeds a reference value as a position at which to start skinning.

11. An apparatus according to claim 8, wherein the clamp shaft of the clamper device (10) is rotatable in both directions and a plurality of air cylinders (61) are provided so that the clamp device is rotated by rotating the clamp shaft to determine rotational position of the clamper device (10) to determine rotational position of the suspended partial meat block to insert swing prevention bar (81) into the end part of the meat block so that the meat block can be rotated smoothly when performing skinning.

12. An apparatus according to claim 8, wherein the lifter unit (70) includes a vertical ball screw (71) on which the cutter device (30) is engaged and a servomotor (34) for rotating the ball screw (71) in both directions to move up and down the cutter device (30).

## Patentansprüche

1. Verfahren zum Häuten eines Teilfleischblocks mit Haut von Tierkarkassen, indem einer Schneidvorrichtung (30) ermöglicht wird, entlang der Oberfläche der Haut nachzufolgen, umfassend:
einen Aufhängeschritt, um den Teilfleischblock mit Haut an einer Klemmvorrichtung (10) aufzuhängen, Feststellen einer Rotationsposition der Klemmvorrichtung, um eine Rotationsposition des Teilfleischblocks mit Haut festzustellen,
einen Positionierungsschritt der Schneidvorrichtung (30), um die Schneidvorrichtung (30) gegen den Teilfleischblock mit Haut zu drücken, sodass an der Außenseite einer Hautvorschubwalze (35) der Schneidvorrichtung (30) gebildete Klauen (35a) in die Haut des Teilfleischblocks mit Haut einstechen, und
einen Häutungsschritt, um während eines Rotierens des Teilfleischblocks, in dessen Haut mit den Klauen (35a) der Hautvorschubwalze (35) der Schneidvorrichtung (30) eingestochen ist, durch Rotieren der Hautvorschubwalze (35) mittels eines Servomotors (34) die Haut mit einem an der Schneidvorrichtung (30) befestigten geraden Cutter (36) zu entfernen,
**dadurch gekennzeichnet, dass** der Aufhängeschritt ferner das Einführen einer Schwingungsverhinderungsstange (81) in einen unteren Endabschnitt des Teilfleischblocks mit Haut aufweist, sodass dieser stabil um eine Mittellinie rotierbar ist, die durch die Mitte der Schwingungsverhinderungsstange (81) und die Mitte der Aufhängung des Teilfleischblocks mit Haut an der Klemmvorrichtung (10) verläuft.

2. Verfahren nach Anspruch 1, wobei nach dem Häutungsschritt ferner vorgesehen ist:
einen Hautschneideschritt, um einen entfernten Hautstreifen zu schneiden, durch Zulassen, dass die Schneidevorrichtung (30) zurückgezogen wird, während der Hautvorschubwalze (35) ermöglicht ist, zu rotieren, und
einen Entfernungsschritt, um den von der Klemmvorrichtung entfernten Teilfleischblock mit Haut zu entfernen.

3. Verfahren nach Anspruch 1, wobei die Schneidvorrichtung (30) in einem Zustand positioniert wird, indem der Teilfleischblock mit Haut mittels Druckwalzen gehalten wird, und ein Häuten nach Lösen der Druckwalzen von dem Teilfleischblock mit Haut durchgeführt wird.

4. Verfahren nach Anspruch 1, wobei die Druckkraft zum Andrücken der Schneidvorrichtung (30) beim Positionieren der Schneidvorrichtung (30) erhöht wird, sodass an der Außenseite einer Hautvorschubwalze (35) der Schneidvorrichtung (30) gebildete Klauen (35a) in die Haut des Teilfleischblocks mit Haut einstechen, und verringert wird, wenn ein Häuten durch Rotieren des Teilfleischblocks mit Haut mittels der Rotation der Hautvorschubwalze (35) durchgeführt wird.

5. Verfahren nach Anspruch 1, wobei eine Rotationsposition des Teilfleischblocks mit Haut zum Beginnen des Häutens durch Rotation einer Klemmwelle der Klemmvorrichtung (10) in dem Positionierungsschritt der Schneidvorrichtung (30) festgelegt wird.

6. Verfahren nach Anspruch 1, wobei die Schneidvorrichtung (30) dem Teilfleischblock mit Haut entlang dessen Oberfläche relativ nachfolgt, um ein Entfernen eines Hautstreifens spiralförmig nach oben durch Kombination einer Rotation der Hautvorschubwalze (35) und Anheben der Schneidvorrichtung (30) durchzuführen.

7. Verfahren nach Anspruch 1, wobei
der Teilfleischblock mit Haut von Tierkarkassen eine Schweinekeule ist, wobei die Schweinekeule von der Klemmvorrichtung (10) mit ihrem durch eine Klemme der Klemmvorrichtung (10) geklemmten Fußgelenk aufgehängt wird,
eine Position an der Oberfläche in einem Mittelteil der Schweinekeule zwischen dem Fußgelenk und einer Hüftseite, an der der Änderungsgrad eines Anstiegs einer vertikal verlaufenden Gratlinie der aufgehängten Schweinekeule relativ zur vertikalen Linie einen Referenzwert übersteigt, als eine Position festgelegt wird, an der das Häuten startet,
die Haut in einem oberen Bereich oberhalb der Position, an dem das Häuten beginnt, durch den geraden Cutter (36) der Schneidvorrichtung (30) entfernt wird, durch Rotieren der Keule und durch Rotieren der Hautvorschubwalze (35) des Häutungswerkzeugs der Schneidvorrichtung (30), während die Schneidvorrichtung (30) angehoben wird, um ein Entfernen eines Hautstreifens spiralförmig nach oben durchzuführen mit ansteigender Anhebegeschwindigkeit des geraden Cutters (36) beim Annähern an das Fußgelenk, und
die Haut in dem hüftseitigen Bereich unterhalb der Position, an der das Häuten beginnt, horizontal durch den geraden Cutter (36) der Schneidvorrichtung (30) entfernt wird, durch Rotieren des Schenkels und durch Rotieren der Hautvorschubwalze (35) des Häutungswerkzeugs der Schneidvorrichtung (30).

8. Vorrichtung zum Häuten eines Teilfleischblocks mit Haut von Tierkarkassen unter Verwendung einer Schneidvorrichtung (30), umfassend:
eine Klemmvorrichtung (10) zum Aufhängen des Teilfleischblocks mit Haut,
eine Zentriereinheit (90), die den aufgehängten Teilfleischblock mit Haut stabilisiert und positioniert, um ein Einführen eines Schwingungsverhinderungsstabs (81) darin hinein vorzubereiten,
eine Schneidvorrichtung (30) zum Entfernen der Haut, wobei die Vorrichtung eine Hautvorschubwalze (35), die an ihrer Außenseite Klauen (35a) zum Einstechen in die Haut aufweist, einen geraden Cutter (36) zum Entfernen der Haut, der sich direkt hinter einer Position befindet, an der die Klauen (35) in die Haut einstechen, und einen Servomotor (34) zum Drehen der Hautvorschubwalze (35) enthält,
ein Andrückmittel, um die Schneidvorrichtung, wenn es den Klauen (35a) der Hautvorschubwalze (35) gestattet ist, in die Haut einzustechen, und während des Häutungsvorgangs, anzudrücken, und
eine Anhebeeinheit (70) zum Auf- und Abwärtsbewegen der Schneidvorrichtung (30),
**dadurch gekennzeichnet, dass** die Vorrichtung ferner eine Schwingungsverhinderungseinheit (80) umfasst, die ein Schwingen des Teilfleischblocks mit Haut durch Einführen des Schwingungsverhinderungsstabs (81) in einen unteren Endabschnitt des aufgehängten Teilfleischblocks mit Haut verhindert.

9. Vorrichtung nach Anspruch 8, wobei eine Fleischblockhalteeinheit (100) eine Walze aufweist, die mit dem Teilfleischblock mit Haut in Kontakt gebracht wird, um eine Schwingung des Teilfleischblocks mit Haut zu verhindern, wenn die Schneidvorrichtung (30) gegen den Teilfleischblock mit Haut gedrückt wird, um den Klauen (35a) der Hautvorschubwalze (35) zu ermöglichen, in die Haut einzustechen.

10. Vorrichtung nach Anspruch 8, wobei ein Häutungsstartpositionfestlegungsmittel vorgesehen ist, das mindestens zwei Erfassungswalzen, die sich entlang der Oberfläche des Teilfleischblocks bewegen, und Beurteilungsmittel aufweist, um eine Neigung der vertikal verlaufenden Gratlinie des Teilfleischblocks mit Haut anhand erfassten Positionen von Mitten der Erfassungswalzen zu berechnen und eine Position, an der ein Neigungsgrad der Gratlinie einen Referenzwert übersteigt, als eine Position festzulegen, an der das Häuten beginnt.

11. Vorrichtung nach Anspruch 8, wobei die Klemmwelle der Klemmvorrichtung (10) in beide Richtungen rotierbar ist und mehrere Luftzylinder (61) so vorgesehen sind, dass die Klemmvorrichtung durch Rotieren der Klemmwelle rotiert wird, um eine Rotationsposition der Klemmvorrichtung (10) festzulegen, sodass eine Rotationsposition des aufgehängten Teilfleischblocks festgelegt wird, um einen Schwingungsverhinderungsstab (81) in den Endabschnitt des Fleischblocks so einzuführen, dass der Fleischblock beim Durchführen des Häutens leichtgängig rotiert werden kann.

12. Vorrichtung nach Anspruch 8, wobei die Anhebeeinheit (70) eine vertikale Kugelumlaufspindel (71), an der die Schneidvorrichtung (30) in Eingriff steht, und einen Servomotor (34) zum Rotieren der Kugelumlaufspindel (71) in beide Richtungen, um die Schneidvorrichtung (30) aufwärts und abwärts zu bewegen, enthält.

## Revendications

1. Procédé de dépouillage d'un bloc de viande partiel avec peau de carcasses animales en permettant à un dispositif de découpe (30) de suivre la surface de la peau comprenant :
une étape consistant à suspendre le bloc de viande partiel avec peau sur un dispositif d'accrochage (10), déterminer une position de rotation du dispositif d'accrochage pour déterminer une position de rotation du bloc de viande partiel avec peau, et
une étape de positionnement de dispositif de découpe (30) pour pousser le dispositif de découpe (30) vers le bloc de viande partiel avec peau de telle manière que des griffes (35a) formées sur la périphérie d'un rouleau d'alimentation de peau (35) du dispositif de découpe (30) mordent dans la peau du bloc de viande partiel avec peau, et
une étape de dépouillage pour enlever la peau avec un couteau droit (36) fixé sur le dispositif de découpe (30) tout en faisant tourner le bloc de viande partiel dont la peau est mordue par les griffes (35a) du rouleau d'alimentation de peau (35) du dispositif de découpe (30) en faisant tourner le rouleau d'alimentation de peau (35) par un servomoteur (34),
**caractérisé en ce que** l'étape de suspension comprend en outre d'insérer une barre anti-basculement (81) dans une partie d'extrémité inférieure du bloc de viande partiel avec peau de telle manière qu'il puisse tourner de manière stable autour d'une ligne centrale passant par le centre de la barre anti-basculement (81) et le centre de suspension du bloc de viande partiel avec peau sur le dispositif d'accrochage (10).

2. Procédé selon la revendication 1, dans lequel sont prévues en outre après ladite étape de dépouillage ;
une étape de découpe de peau pour découper une bande de peau enlevée en permettant au dispositif de découpe (30) d'être retiré tout en permettant au rouleau d'alimentation de peau (35) de tourner, et
une étape d'enlèvement pour enlever le bloc de viande partiel avec peau enlevée du dispositif d'accrochage.

3. Procédé selon la revendication 1, dans lequel le dispositif de découpe (30) est positionné dans un état où le bloc de viande partiel avec peau est maintenu au moyen de rouleaux de poussée et le dépouillage est réalisé après que les rouleaux de poussée sont venus hors de prise du bloc de viande partiel avec peau.

4. Procédé selon la revendication 1, dans lequel la force de poussée pour pousser le dispositif de découpe (30) est augmentée lors du positionnement du dispositif de découpe (30) de telle manière que des griffes (35a) formées sur la périphérie du rouleau d'alimentation de peau (35) du dispositif de découpe (30) mordent dans la peau du bloc de viande partiel avec peau et diminuée lorsque le dépouillage est réalisé en faisant tourner le bloc de viande partiel avec peau par la rotation du rouleau d'alimentation de peau (35).

5. Procédé selon la revendication 1, dans lequel une position en rotation du bloc de viande partiel avec peau pour commencer le dépouillage est déterminée en faisant tourner un arbre d'accrochage du dispositif d'accrochage (10) dans l'étape de positionnement du dispositif de découpe (30).

6. Procédé selon la revendication 1, dans lequel le dispositif de découpe (30) suit le bloc de viande partiel avec peau le long de la surface de celui-ci pour réaliser le dépouillage d'une bande de peau en spirale vers le haut par combinaison de la rotation du rouleau d'alimentation de peau (35) et du soulèvement du dispositif de découpe (30).

7. Procédé selon la revendication 1, dans lequel
ledit bloc de viande partiel avec peau des carcasses animales est une cuisse de porc, la cuisse de porc est suspendue au dispositif d'accrochage (10) avec sa cheville serrée par un élément d'accrochage du dispositif d'accrochage (10),
une position sur la surface au niveau d'une partie médiane de la cuisse de porc entre la cheville et le côté hanche où le taux de changement d'inclinaison d'une ligne d'arête s'étendant verticalement de la cuisse de porc suspendue relativement à la ligne verticale dépasse une valeur de référence est déterminée comme une position dans laquelle commencer le dépouillage,
la peau dans une région supérieure au-dessus de ladite position dans laquelle commencer le dépouillage est enlevée par le couteau droit (36) du dispositif de découpe (30) en faisant tourner la cuisse en faisant tourner le rouleau d'alimentation de peau (35) de l'outil de dépouillage du dispositif de découpe (30) tout en soulevant le dispositif de découpe (30) pour réaliser l'enlèvement en spirale vers le haut d'une bande de la peau avec la vitesse de soulèvement augmentée quand le couteau droit (36) approche de la cheville, et
la peau dans la région côté hanche sous ladite position dans laquelle commencer le dépouillage est enlevée horizontalement par le couteau droit (36) du dispositif de découpe (30) en faisant tourner la cuisse en faisant tourner le rouleau d'alimentation de peau (35) de l'outil de dépouillage du dispositif de découpe (30).

8. Dispositif de dépouillage d'un bloc de viande partiel avec peau de carcasses animales utilisant un dispositif de découpe (30), comprenant :
un dispositif d'accrochage (10), auquel est suspendu le bloc de viande partiel avec peau,
une unité de centrage (90), stabilisant et positionnant le bloc de viande partiel avec peau suspendu pour préparer l'insertion d'une barre anti-basculement (81) dedans,
un dispositif de découpe (30) pour enlever la peau, le dispositif incluant un rouleau d'alimentation de peau (35) comportant sur sa périphérie des griffes (35a) pour mordre dans la peau, un couteau droit (36) pour enlever la peau située juste derrière une position où les griffes (35a) mordent dans la peau et un servomoteur (34) pour faire tourner le rouleau d'alimentation de peau (35),
des moyens de poussée pour pousser le dispositif de découpe pour permettre aux griffes (35a) du rouleau d'alimentation de peau (35) de mordre dans la peau et pendant l'opération de dépouillage, et
une unité de soulèvement (70) pour déplacer vers le haut et vers le bas le dispositif de découpe (30),
**caractérisé en ce que** le dispositif comprend en outre une unité anti-basculement (80), empêchant le basculement du bloc de viande partiel avec peau en insérant ladite barre anti-basculement (81) dans une partie d'extrémité inférieure du bloc de viande partiel avec peau suspendu.

9. Dispositif selon la revendication 8, dans lequel une unité de maintien de bloc de viande (100) comportant un rouleau destiné à être amené en contact avec le bloc de viande partiel avec peau pour empêcher le basculement de celui-ci quand le dispositif de découpe (30) est poussé vers le bloc de viande partiel avec peau pour permettre aux griffes (35a) du rouleau d'alimentation de peau (35) de mordre dans la peau.

10. Dispositif selon la revendication 8, dans lequel des moyens de détermination de position de début de dépouillage sont fournis qui comportent au moins deux rouleaux de détection se déplaçant le long de la surface du bloc de viande partiel et des moyens de jugement pour calculer l'inclinaison de la ligne d'arête s'étendant verticalement du bloc de viande partiel avec peau en fonction des positions détectées des centres des rouleaux de détection et déterminent une position où le taux d'inclinaison de la ligne d'arête dépasse une valeur de référence comme une position dans laquelle commencer le dépouillage.

11. Dispositif selon la revendication 8, dans lequel l'arbre d'accrochage du dispositif d'accrochage (10) peut tourner dans les deux directions et une pluralité de vérins pneumatiques (61) sont fournis de telle manière que le dispositif d'accrochage est tourné en faisant tourner l'arbre d'accrochage pour déterminer une position en rotation du dispositif d'accrochage (10) pour déterminer une position en rotation du bloc de viande partiel suspendu pour insérer une barre anti-basculement (81) dans la partie d'extrémité du bloc de viande de telle manière que le bloc de viande puisse être mis en rotation doucement lors de la réalisation du dépouillage.

12. Dispositif selon la revendication 8, dans lequel l'unité de soulèvement (70) inclut une vis à billes (71) verticale sur laquelle le dispositif de découpe (30) est en prise et un servomoteur (34) pour faire tourner la vis à billes (71) dans les deux directions pour soulever et abaisser le dispositif de découpe (30).
